# FASCICULE DE BREVET EUROPEEN

(11) **EP 2 454 784 B1**
(45) Date de publication et mention de la délivrance du brevet: **14.10.2015**
(21) Numéro de dépôt: 10745311.0
(22) Date de dépôt: 24.06.2010
(51) Int. Cl.: H01R 13/627, F21V 19/00, F21S 8/10, H01R 13/631

(54) **DISPOSITIF DE RACCORDEMENT ÉLECTRIQUE RAPPORTÉ POUR UN ÉLÉMENT DE VÉHICULE**
ZUSÄTZLICHE ELEKTRISCHE ANSCHLUSSVORRICHTUNG FÜR EIN FAHRZEUGELEMENT
ADDITIONAL ELECTRICAL CONNECTION DEVICE FOR A VEHICLE ELEMENT

(30) Priorité: 13.07.2009 FR 0954862
(43) Date de publication de la demande: 23.05.2012
(73) Titulaire: Peugeot Citroën Automobiles Société Anonyme, 78140 Vélizy Villacoublay (FR)
(72) Inventeur: PERON, Rodolphe, F-95220 Herblay (FR); DUVAL, Thomas, F-91330 Yerres (FR)
(86) Numéro de dépôt international: PCT/FR2010/051288
(87) Numéro de publication internationale: WO 2011/007068

(56) Documents cités:
- EP-A2- 0 611 867
- EP-A2- 1 926 183
- US-A- 4 621 885
- US-A1- 2007 093 114
- US-B1- 7 476 014

## Description

L'invention concerne certains éléments de véhicule, éventuellement de type automobile, et plus précisément ceux qui comprennent un dispositif de raccordement électrique.

Comme le sait l'homme de l'art, certains éléments de véhicule, comme par exemple certains blocs optiques, comprennent au moins un dispositif de raccordement électrique destiné à permettre le raccordement électrique d'au moins un équipement (comme par exemple une source de lumière) à un faisceau d'alimentation électrique. Dans le cas d'un bloc optique, ce dispositif de raccordement électrique est généralement solidarisé fixement au boîtier du bloc optique ou à l'éventuel porte lampe que peut comprendre le bloc optique.

On comprendra que ce mode de réalisation impose que le dispositif de raccordement électrique soit spécifiquement conçu pour un unique type d'élément (par exemple un unique type de boîtier ou un unique type de porte lampe), et donc ne peut pas être solidarisé à des éléments d'un autre type.

En outre, la solidarisation du dispositif de raccordement électrique à l'élément se fait généralement par clippage ou par vissage, et par conséquent, le dispositif de raccordement électrique subit quasiment toutes les vibrations que subit son élément, ce qui peut conduire à des dégradations des contacts électriques internes et/ou à des faux contacts électriques qui occasionnent des pannes.

Le document EP-A-0611867 décrit un dispositif de raccordement électrique d'après le préambule de la revendication 1.

L'invention a donc pour but d'améliorer la situation.

Elle propose à cet effet un dispositif de raccordement électrique d'après la revendication 1, destiné à être rapporté sur et solidarisé à un élément (par exemple un boîtier ou un porte lampe d'un bloc optique) de véhicule, éventuellement de type automobile, et comprenant :
- un connecteur électrique comportant une paroi munie de premiers moyens de solidarisation, et
- une lame flexible comprenant i) une première partie munie de deuxièmes moyens de solidarisation propres à coopérer avec les premiers moyens de solidarisation pour solidariser la lame flexible à la paroi du connecteur électrique, et ii) une seconde partie présentant une extension suivant une direction principale supérieure à celle de la première partie, située sensiblement au dessus de cette dernière, connectée à la première partie par une partie intermédiaire, et munie de troisièmes moyens de solidarisation propres à coopérer avec des quatrièmes moyens de solidarisation définis sur une paroi de l'élément pour solidariser la lame flexible à la paroi de l'élément.

La seconde partie de la lame flexible est située sensiblement au dessus de la première partie de la lame flexible ; ces deux parties sont au moins partiellement en vis-à-vis, c'est-à-dire face à face, et non pas totalement décalées l'une part rapport à l'autre.

Préférentiellement, il y a une ou plusieurs lames flexibles mais uniquement du côté d'une seule paroi du connecteur électrique. Afin de découpler le connecteur électrique des vibrations de l'élément de véhicule, notamment la paroi opposée à la paroi du connecteur électrique coopérant avec la ou les lames flexibles, reste libre de manière à limiter la transmission des vibrations. Avantageusement, le dispositif de raccordement électrique ne contient qu'une seule lame flexible par connecteur électrique. Dans le document EP 611867, il y a au contraire deux lames flexibles 5 (voir figure 1 et colonne 3 lignes 23-25), situées de part et d'autre du connecteur électrique, coopérant avec deux parois opposées du connecteur électrique pour venir enserrer et bloquer le connecteur électrique dans l'élément de véhicule : les vibrations se transmettent de l'élément de véhicule au connecteur électrique nettement plus dans cet art antérieur que dans notre invention.

Le dispositif de raccordement électrique selon l'invention peut comporter d'autres caractéristiques qui peuvent être prises séparément ou en combinaison, et notamment :
- sa lame flexible peut présenter une forme générale en J ;
- les troisièmes et quatrièmes moyens de solidarisation peuvent être agencés pour solidariser de façon inamovible la lame flexible à la paroi de l'élément ;

- la seconde partie peut comprendre une extrémité libre propre à être introduite dans une première glissière que comprennent les quatrièmes moyens de solidarisation. Dans ce cas, les troisièmes moyens de solidarisation peuvent comprendre au moins une protubérance définie sur une face externe de la seconde partie au niveau de son extrémité libre, s'étendant suivant une direction sensiblement transversale à la direction principale, et propre à être bloquée en translation suivant cette direction principale par au moins une protubérance définie sur une face interne de la première glissière ;
   ➢ les troisièmes moyens de solidarisation peuvent comprendre au moins deux protubérances définies sensiblement parallèlement à la direction transversale sur la face externe de la seconde partie au niveau de son extrémité libre ;
- les premiers moyens de solidarisation peuvent comprendre une seconde glissière définie sur une face externe de la paroi du connecteur électrique et propre à recevoir une partie au moins de la première partie ;
   ➢ la première partie peut comprendre deux décrochements vers l'intérieur qui définissent deux surfaces d'appui. Dans ce cas, la seconde glissière peut comprendre, dans une partie arrière, deux surfaces de butée destinées à interdire aux surfaces d'appui de les dépasser lors de l'introduction de la première partie dans la seconde glissière ;
- les premiers moyens de solidarisation peuvent comprendre une dent présentant un pan avant incliné et définie sur la face externe de la paroi du connecteur électrique, dans une zone située sensiblement au milieu de la partie arrière de la seconde glissière. Dans ce cas, les deuxièmes moyens de solidarisation peuvent comprendre un trou propre à loger la dent à la fin de l'introduction de la première partie dans la seconde glissière ;
- sa lame flexible peut être réalisée dans un matériau métallique.

L'invention propose également un élément (comme par exemple un boîtier ou un porte lampe de bloc optique) de véhicule comprenant un dispositif de raccordement électrique du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue en perspective, une partie d'un exemple de boîtier de bloc optique équipé d'un exemple de réalisation de dispositif de raccordement électrique selon l'invention,
- la figure 2 illustre schématiquement, dans une vue en perspective, l'exemple de réalisation du connecteur électrique du dispositif de raccordement électrique de la figure 1,
- la figure 3 illustre schématiquement, dans une vue en perspective, l'exemple de réalisation de la lame flexible du dispositif de raccordement électrique de la figure 1,
- la figure 4 illustre schématiquement, dans une vue en perspective, le connecteur électrique de la figure 2 et la lame flexible de la figure 3 juste avant leur solidarisation, et
- la figure 5 illustre schématiquement, dans une vue en perspective, le dispositif de raccordement électrique, constitué par solidarisation du connecteur électrique de la figure 2 et de la lame flexible de la figure 3, au début de sa solidarisation à un boîtier de bloc optique.

Les dessins annexés pourront non seulement servir à compléter l'invention, mais aussi contribuer à sa définition, le cas échéant.

L'invention a pour but d'offrir un dispositif de raccordement électrique (D) pouvant être rapporté sur des éléments (BB) (comme par exemple des boîtiers ou portes lampe de blocs optiques (BO)) de véhicule de différents types.

Dans ce qui suit, on considère, à titre d'exemple non limitatif, que le dispositif de raccordement électrique (D) est destiné à équiper un bloc optique (BO) de véhicule automobile. Mais, l'invention n'est limitée ni à ce type de véhicule, ni à ce type d'équipement. Elle concerne en effet tout type de véhicule comportant au moins un élément auquel doit être solidarisé un dispositif de raccordement électrique (D).

Par ailleurs, on considère dans ce qui suit, à titre d'exemple non limitatif, que le dispositif de raccordement électrique (D) est destiné à être solidarisé à un élément de bloc optique (BO) agencé sous la forme d'un boîtier (BB), par exemple en matériau plastique ou synthétique moulé. Mais, l'invention n'est pas limitée à ce type d'élément. Elle concerne en effet tout type d'élément auquel peut être solidarisé un dispositif de raccordement électrique (D), en vue du raccordement électrique d'un équipement (comme par exemple une source de lumière) à un faisceau d'alimentation électrique, et notamment un porte lampe de bloc optique.

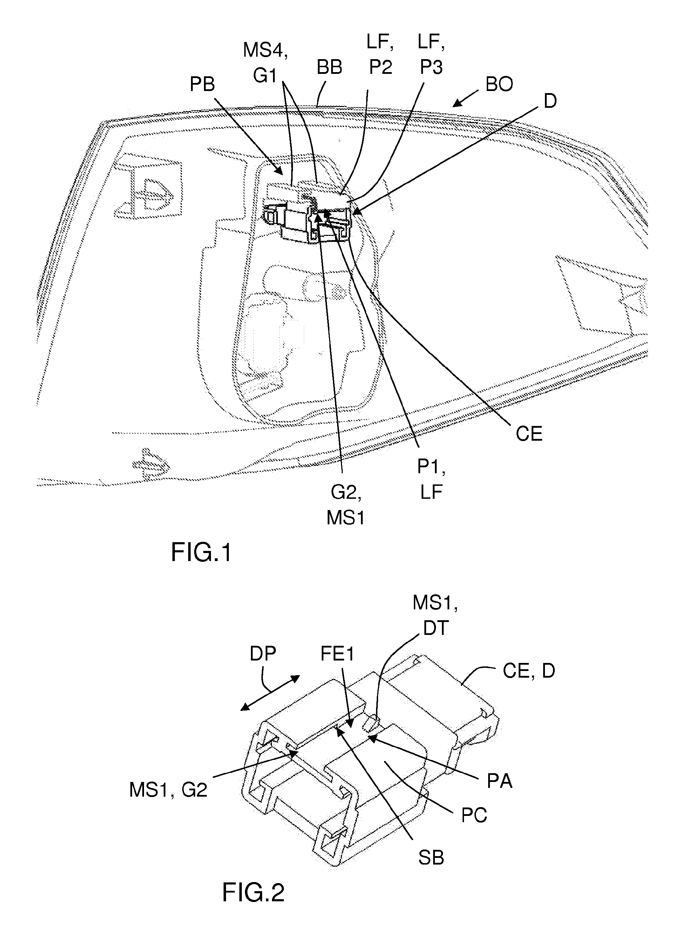

On a schématiquement représenté sur la figure 1 une partie d'un boîtier (ou élément) BB d'un bloc optique BO de véhicule, destiné à loger au moins une source de lumière (non représentée) et à être solidarisé à un verre (ou équivalent) protecteur et éventuellement fonctionnel.

Ce boîtier BB comprend une paroi PB munie en un endroit choisi de (quatrièmes) moyens de solidarisation MS4 destinés à permettre la solidarisation d'un dispositif de raccordement électrique D selon l'invention.

Comme cela est mieux illustré sur les figures 2 à 5, un dispositif (de raccordement électrique) D, selon l'invention, comprend un connecteur électrique CE et une lame flexible LF.

Le connecteur électrique CE est destiné, une fois solidarisé au boîtier BB, à permettre le raccordement électrique d'au moins une source de lumière, implantée dans le boîtier BB, à un faisceau d'alimentation électrique du véhicule. Il est par exemple réalisé partiellement en matériau plastique ou synthétique moulé et comprend des contacts électriques internes.

Ce connecteur électrique CE comporte une paroi PC qui est munie de premiers moyens de solidarisation MS1, sur lesquels on reviendra plus loin.

La lame flexible LF est par exemple réalisée dans un matériau métallique. Mais, elle pourrait également être réalisée dans un matériau plastique ou synthétique suffisamment résistant et légèrement flexible.

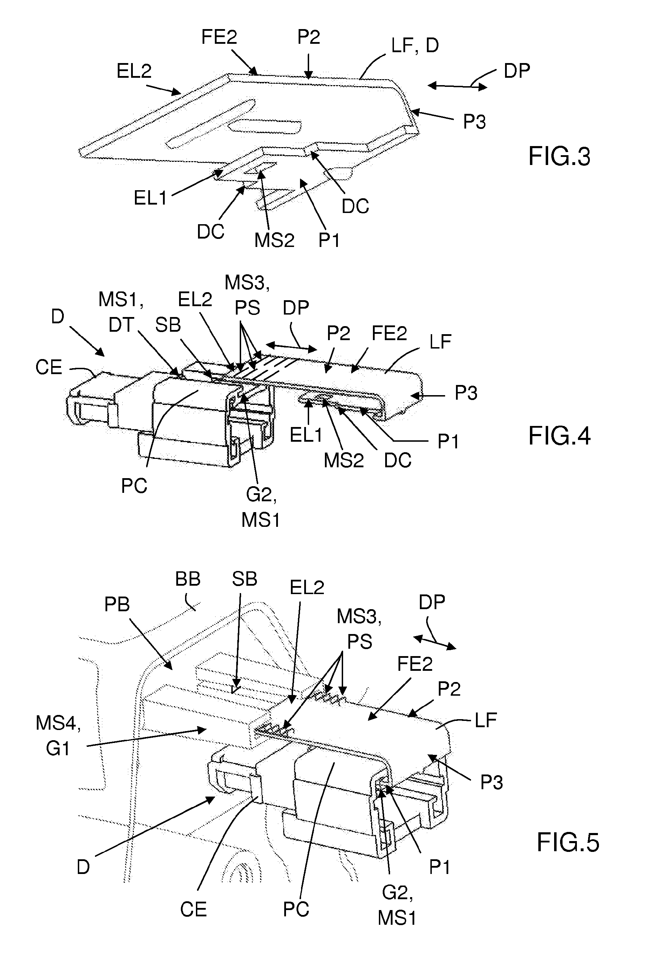

Comme illustré sur la figure 3, notamment, cette lame flexible LF comprend trois parties P1 à P3. Une première partie P1 est munie de deuxièmes moyens de solidarisation MS2 qui sont propres à coopérer avec les premiers moyens de solidarisation MS1 du connecteur électrique CE pour solidariser la lame flexible LF à la paroi PC du connecteur électrique CE.

Cette première partie P1 s'étend suivant une direction principale DP et une direction transversale à cette direction principale DP.

Par exemple, les premiers moyens de solidarisation MS1 comprennent une (seconde) glissière G2 qui est définie sur une face externe FE1 de la paroi PC du connecteur électrique CE. On entend ici par « face externe » une face qui est orientée vers l'extérieur et non vers l'intérieur du connecteur électrique CE. Cette seconde glissière G2 est agencée de manière à recevoir à coulissement une partie au moins de la première partie P1 de la lame flexible LF. Elle est par exemple définie par deux évidements latéraux qui sont sensiblement parallèles entre eux, définissent deux rainures de coulissement, et sont séparés par un évidement central.

Dans l'exemple de réalisation non limitatif illustré sur les figures 2 et 4, les premiers moyens de solidarisation MS1 comprennent une dent (ou saillie ou encore pion) DT qui est définie sur la face externe FE1 de la paroi PC du connecteur électrique CE, dans une zone qui est située sensiblement au milieu de la partie arrière PA de l'évidement central de la seconde glissière G2 (c'est-à-dire entre ses deux rainures latérales). Cette dent DT présente un pan avant qui est incliné. Dans ce cas, et comme illustré sur les figures 3 et 4, les deuxièmes moyens de solidarisation MS2 peuvent par exemple comprendre un trou dont la forme est choisie de manière à permettre le logement de la dent DT en fin d'introduction de la première partie P1 dans la seconde glissière G2, suivant la direction principale DP. Par exemple, ce trou MS2 est de forme rectangulaire (éventuellement carré). On comprendra que le pan incliné vers l'avant permet à l'extrémité libre EL1 de la première partie P1 (opposée à la partie intermédiaire P3) de coulisser sur lui suivant la direction principale DP et ainsi de faire parvenir le trou MS2 au dessus de la dent DT. La dent DT peut alors être logée dans le trou MS2 et ainsi empêcher tout déplacement de la première partie P1 de la lame flexible LF par rapport au connecteur électrique CE, notamment suivant la direction principale DP.

On notera que pour empêcher que le trou MS2 n'aille au-delà de la dent DT en fin d'introduction, il est avantageux que la première partie P1 comprenne deux décrochements DC vers l'intérieur qui définissent deux surfaces d'appui, et que la seconde glissière G2 comprenne, dans sa partie arrière PA, deux surfaces de butée SB qui interdisent aux surfaces d'appui de les dépasser. La distance suivant la direction principale DP séparant les surfaces de butée SB de la dent DT est sensiblement égale à la distance suivant la direction principale DP séparant les surfaces d'appui du trou MS2.

Une seconde partie P2 de la lame flexible LF s'étend également suivant la direction principale DP et la direction qui est transversale à cette direction principale DP. Cependant, son extension suivant la direction principale est strictement supérieure à celle de la première partie P1. En outre, cette seconde partie P2 est située sensiblement « au dessus » de la première partie P1 (lorsque la lame flexible LF est placée dans la position illustrée sur les figures 1 à 5).

Par ailleurs, et comme indiqué ci-avant, la seconde partie P2 est connectée à la première partie P1 par la partie intermédiaire P3. Dans l'exemple non limitatif illustré sur les figures 1 à 5, la lame flexible LF présente une forme générale en J. Mais, elle pourrait présenter d'autres formes générales, comme par exemple une forme générale en U.

On comprendra que la forme particulière de la lame LF et sa flexibilité lui permettent d'absorber une partie des vibrations que subit le boîtier BB et qui pourraient dégrader les contacts électriques qui sont logés dans le connecteur électrique CE.

De plus, la seconde partie P2 est munie de troisièmes moyens de solidarisation MS3 qui sont agencés de manière à coopérer avec les quatrièmes moyens de solidarisation MS4 qui sont définis sur la paroi PB du boîtier BB pour solidariser la lame flexible LF à cette paroi PB.

Par exemple, les troisièmes MS3 et quatrièmes MS4 moyens de solidarisation peuvent être agencés pour solidariser de façon inamovible la lame flexible LF à la paroi PB du boîtier BB. Mais cela n'est pas obligatoire. Ils pourraient en effet être agencés pour solidariser de façon amovible la lame flexible LF à la paroi PB du boîtier BB afin de permettre le remplacement du dispositif D.

Dans l'exemple de réalisation non limitatif illustré sur les figures 1 et 5, les quatrièmes moyens de solidarisation MS4 comprennent une première glissière G1, définie sensiblement perpendiculairement à la paroi PB du boîtier BB. La seconde partie P2 comprend alors une extrémité libre EL2 (opposée à la partie intermédiaire P3) qui est agencée de manière à être introduite dans la première glissière G1.

Afin de permettre la solidarisation de la seconde partie P2 à la première glissière G1, les troisièmes moyens de solidarisation MS3 peuvent, comme illustré sur les figures 4 et 5, comprendre au moins une protubérance PS définie sur la face externe FE2 de la seconde partie P2 au niveau de son extrémité libre EL2. Chaque protubérance PS s'étend sensiblement suivant la direction qui est transversale à la direction principale DP, et est agencée de manière à être bloquée en translation suivant la direction principale DP par au moins une protubérance définie sur une face interne de la première glissière G1.

Comme illustré non limitativement sur les figures 4 et 5, chaque protubérance PS peut par exemple être agencée sous la forme d'une nervure transversale présentant au moins un pan arrière incliné de manière à pouvoir glisser sur une protubérance des quatrièmes moyens de solidarisation MS4 lors de la phase d'introduction de la seconde partie P2 dans la première glissière G1 suivant la direction principale DP. On notera que si l'on souhaite obtenir une solidarisation inamovible de la seconde partie P2 par rapport au boîtier BB, il faut que le pan arrière de chaque protubérance des quatrièmes moyens de solidarisation MS4 (c'est-à-dire celui qui est orienté vers la paroi PB du boîtier BB) soit sensiblement vertical et que dans le même temps le pan avant de chaque protubérance PS soit sensiblement vertical. En revanche, si l'on souhaite obtenir une solidarisation amovible de la seconde partie P2 par rapport au boîtier BB, il faut que les pans avant et arrière de chaque protubérance PS soient tous les deux inclinés de façon opposée.

On notera, comme illustré non limitativement sur les figures 4 et 5, que les troisièmes moyens de solidarisation MS3 peuvent comprendre au moins deux protubérances PS définies sensiblement parallèlement à la direction transversale et à des niveaux différents suivant la direction principale DP sur la face externe FE2 de la seconde partie P2 au niveau de son extrémité libre EL2. On comprendra que grâce à ces différentes protubérances PS il est possible de définir plusieurs positions de solidarisation suivant la direction principale DP qui correspondent à différents types de boîtier BB. Dans l'exemple de réalisation illustré non limitativement sur les figures 4 et 5, les troisièmes moyens de solidarisation MS3 comprennent deux séries de plusieurs protubérances PS qui sont définies dans deux parties latérales de l'extrémité libre EL2 de la seconde partie P2 qui sont situées sensiblement au même niveau suivant la direction principale DP, de manière à renforcer la qualité de la solidarisation.

On notera qu'il est avantageux de solidariser à l'avance la première partie P1 de la lame flexible LF au connecteur électrique CE, via leurs premiers MS1 et deuxièmes MS2 moyens de solidarisation, de manière à constituer un dispositif D assemblé, puis de procéder à la solidarisation du dispositif D assemblé à la paroi PB du boîtier BB, en faisant coopérer leurs troisièmes MS3 et quatrièmes moyens de solidarisation.

L'invention ne se limite pas aux modes de réalisation de dispositif de raccordement électrique, d'élément et de bloc optique décrits ci-avant, seulement à titre d'exemple, mais elle englobe toutes les variantes que pourra envisager l'homme de l'art dans le cadre des revendications ci-après.

## Revendications

1. Dispositif de raccordement électrique (D) pour un élément (BB) de véhicule, le dispositif comprenant i) un connecteur électrique (CE) comportant une paroi (PC) munie de premiers moyens de solidarisation (MS1), et ii) une lame flexible (LF) comprenant une première partie (P1) munie de deuxièmes moyens de solidarisation (MS2) propres à coopérer avec lesdits premiers moyens de solidarisation (MS1) pour solidariser ladite lame flexible (LF) à ladite paroi (PC) du connecteur électrique (CE), et une seconde partie (P2) présentant une extension suivant une direction principale supérieure à celle de ladite première partie (P1), située sensiblement au dessus de cette dernière (P1), connectée à ladite première partie (P1) par une partie intermédiaire (P3), et munie de troisièmes moyens de solidarisation (MS3) propres à coopérer avec des quatrièmes moyens de solidarisation (MS4) définis sur une paroi (PB) dudit élément (BB) pour solidariser ladite lame flexible (LF) à ladite paroi (PB) de l'élément (BB),
**caractérisé en ce que** ladite second partie (P2) comprend une extrémité libre (EL2) prope à être introduite dans une première glissière (G1) que comprennent lesdits quatrièmes moyens de solidarisation (MS4), et **en ce que** ladite second partie est prope à être bloquée en translation suivant ladite direction principale par au moins une protubérance définie sur une face interne de ladite première glissière G1).

2. Dispositif selon la revendication 1, **caractérisé en ce que** lesdits troisièmes (MS3) et quatrièmes (MS4) moyens de solidarisation sont agencés pour solidariser de façon inamovible ladite lame flexible (LF) à ladite paroi (PB) de l'élément (BB).

3. Dispositif selon l'une des revendications 1 et 2, caractérisé et en ce que lesdits troisièmes moyens de solidarisation (MS3) comprennent au moins une protubérance (PS) définie sur une face externe (FE2) de ladite seconde partie (P2) au niveau de son extrémité libre (EL2), s'étendant suivant une direction sensiblement transversale à ladite direction principale.

4. Dispositif selon la revendication 3, **caractérisé en ce que** lesdits troisièmes moyens de solidarisation (MS3) comprennent au moins deux protubérances (PS) définies sensiblement parallèlement à ladite direction transversale sur la face externe (FE2) de la seconde partie (P2) au niveau de son extrémité libre (EL2).

5. Dispositif selon l'une des revendications 1 à 4, **caractérisé en ce que** ladite lame flexible (LF) présente une forme générale en J.

6. Dispositif selon l'une des revendications 1 à 5, **caractérisé en ce que** lesdits premiers moyens de solidarisation (MS1) comprennent une seconde glissière (G2) définie sur une face externe (FE1) de ladite paroi (PC) du connecteur électrique (CE) et propre à recevoir une partie au moins de ladite première partie (P1).

7. Dispositif selon la revendication 6, **caractérisé en ce que** ladite première partie (P1) comprend deux décrochements (DC) vers l'intérieur définissant deux surfaces d'appui, et **en ce que** ladite seconde glissière (G2) comprend, dans une partie arrière (PA), deux surfaces de butée (SB) interdisant auxdites surfaces d'appui de les dépasser lors de l'introduction de ladite première partie (P1) dans ladite seconde glissière (G2).

8. Dispositif selon l'une des revendications 1 à 7, **caractérisé en ce que** lesdits premiers moyens de solidarisation (MS1) comprennent une dent (DT) présentant un pan avant incliné et définie sur ladite face externe (FE1) de la paroi (PC) du connecteur électrique (CE), dans une zone située sensiblement au milieu de la partie arrière (PA) de ladite seconde glissière (G2), et **en ce que** lesdits deuxièmes moyens de solidarisation (MS2) comprennent un trou propre à loger ladite dent (DT) en fin d'introduction de ladite première partie (P1) dans ladite seconde glissière (G2).

9. Dispositif selon l'une des revendications 1 à 8, **caractérisé en ce que** ladite lame flexible (LF) est réalisée dans un matériau métallique.

10. Elément (BB) de véhicule, **caractérisé en ce qu'**il comprend un dispositif de raccordement électrique (D) selon l'une des revendications 1 à 9.

11. Bloc optique (BO) de véhicule, **caractérisé en ce qu'**il comprend au moins un élément (BB) selon la revendication 10.

## Patentansprüche

1. Elektrische Anschlussvorrichtung (D) für ein Fahrzeugelement (BB), wobei die Vorrichtung i) einen elektrischen Verbinder (CE), der eine Wand (PC) aufweist, die mit ersten Verbindungsmitteln (MS1) ausgestattet ist, und ii) eine flexible Zunge (LF), die einen ersten Teil (P1), der mit zweiten Verbindungsmitteln (MS2) ausgestattet ist, die imstande sind, mit den ersten Verbindungsmitteln (MS1) zusammenzuarbeiten, um die flexible Zunge (LF) mit der Wand (PC) des elektrischen Verbinders (CE) zu verbinden, und einen zweiten Teil (P2), der eine Erweiterung gemäß einer höheren Hauptrichtung als der des ersten Teils (P1) aufweist, die sich etwa über diesem letzteren (P1) befindet, die mit dem ersten Teil (P1) mit Hilfe eines Übergangsteils (P3) verbunden ist, umfasst, und mit dritten Verbindungsmitteln (MS3) ausgestattet ist, die imstande sind, mit vierten Verbindungsmitteln (MS4) zusammenzuarbeiten, die auf einer Wand (PB) des Elements (BB) definiert sind, um die flexible Zunge (LF) mit der Wand (PB) des Elements (BB) zu verbinden, umfasst,
**dadurch gekennzeichnet, dass** der zweite Teil (P2) ein freies Ende (EL2) umfasst, das imstande ist, in eine erste Gleitschiene (G1) eingeführt zu sein, die die vierten Verbindungsmittel (MS4) umfassen, und dass der zweite Teil imstande ist, in Verschiebung gemäß der Hauptrichtung von mindestens einem Vorsprung blockiert zu sein, der auf einer inneren Fläche der ersten Gleitschiene (G1) definiert ist.

2. Vorrichtung nach Anspruch 1, **dadurch gekennzeichnet, dass** die dritten (MS3) und vierten (MS4) Verbindungsmittel ausgebildet sind, um die flexible Zunge (LF) mit der Wand (PB) des Elements (BB) unlösbar fest zu verbinden.

3. Vorrichtung nach einem der Ansprüche 1 und 2, **dadurch gekennzeichnet, dass** die dritten Verbindungsmittel (MS3) mindestens einen Vorsprung (PS) umfassen, der auf einer äußeren Fläche (FE2) des zweiten Teils (P2) im Bereich seines freien Endes (EL2) definiert ist, der sich in einer etwa transversalen Richtung zur Hauptrichtung erstreckt.

4. Vorrichtung nach Anspruch 3, **dadurch gekennzeichnet, dass** die dritten Verbindungsmittel (MS3) mindestens zwei Vorsprünge (PS) umfassen, die etwa parallel zur transversalen Richtung auf der äußeren Fläche (FE2) des zweiten Teils (P2) im Bereich seines freien Endes (EL2) definiert sind.

5. Vorrichtung nach einem der Ansprüche 1 bis 4, **dadurch gekennzeichnet, dass** die flexible Zunge (LF) eine allgemeine J-Form aufweist.

6. Vorrichtung nach einem der Ansprüche 1 bis 5, **dadurch gekennzeichnet, dass** die ersten Verbindungsmittel (MS1) eine zweite Gleitschiene (G2) umfassen, die auf einer äußeren Fläche (FE1) der Wand (PC) des elektrischen Verbinders (CE) definiert und imstande ist, mindestens einen Teil des ersten Teils (P1) aufzunehmen.

7. Vorrichtung nach Anspruch 6, **dadurch gekennzeichnet, dass** der erste Teil (P1) zwei Ausbuchtungen (DC) nach innen umfasst, die zwei Stützflächen definieren, und dass die zweite Gleitschiene (G2) in einem hinteren Teil (PA) zwei Anschlagflächen (SB) umfasst, die es den Stützflächen verbieten, beim Einsetzen des ersten Teils (P1) in die zweite Gleitschiene (G2) an ihnen vorbeizugleiten.

8. Vorrichtung nach einem der Ansprüche 1 bis 7, **dadurch gekennzeichnet, dass** die ersten Verbindungsmittel (MS1) einen Zahn (DT) umfassen, der eine vordere geneigte Fläche aufweist und auf der äußeren Fläche (FE1) der Wand (PC) des elektrischen Verbinders (CE) in einem Bereich etwa in der Mitte des hinteren Teils (PA) der zweiten Gleitschiene (G2) definiert ist und dass die zweiten Verbindungsmittel (MS2) ein Loch aufweisen, das imstande ist, den Zahn (DT) am Ende des Einsetzens des ersten Teils (P1) in die zweite Gleitschiene (G2) aufzunehmen.

9. Vorrichtung nach einem der Ansprüche 1 bis 8, **dadurch gekennzeichnet, dass** die flexible Zunge (LF) aus einem metallischen Material hergestellt ist.

10. Fahrzeugelement (BB), **dadurch gekennzeichnet, dass** es eine elektrische Anschlussvorrichtung (D) nach einem der Ansprüche 1 bis 9 umfasst.

11. Optischer Fahrzeugblock (BO), **dadurch gekennzeichnet, dass** er mindestens ein Element (BB) nach Anspruch 10 umfasst.

## Claims

1. Electrical connection device (D) for a vehicle element (BB), the device comprising i) an electrical connector (CE) comprising a wall (PC) provided with first attachment means (MS1), and ii) a flexible blade (LF) comprising a first part (P1) provided with second attachment means (MS2) able to cooperate with said first attachment means (MS1) in order to attach said flexible blade (LF) to said wall (PC) of the electrical connecter (CE), and a second part (P2) having an extension in a principal direction greater than that of said first part (P1), situated substantially above the latter (P1), connected to said first part (P1) by an intermediate part (P3), and provided with third attachment means (MS3) able to cooperate with fourth attachment means (MS4) defined on a wall (PB) of said element (BB) in order to attached said flexible blade (LF) to said wall (PB) of the element (BB),
**characterised in that** said part (P2) comprises a free end (EL2) able to be introduced into a first runner (G1) that said fourth attachment means (MS4) comprise, and **in that** said second part is able to be locked with respect to translation along said principal direction by at least one protuberance defined on an internal face of said first runner (G1).

2. Device according to claim 1, **characterised in that** said third (MS3) and fourth (MS4) attachment means are arranged so as to non-removably attach said flexible blade (LF) to said wall (PB) of the element (BB).

3. Device according one of claims 1 and 2, **characterised in that** said third attachment means (MS3) comprise at least one protuberance (PS) defined on an external face (FE2) of said second part (P2) at its free end (EL2), extending in a direction substantially transverse to said principal direction.,

4. Device according to claim 3, **characterised in that** said third attachment means (MS3) comprise at least two protuberances (PS) defined substantially parallel to said transverse direction on the external face (FE2) of the second part (P2) at its free end (EL2).

5. Device according to one of claims 1 to 4, **characterised in that** said flexible blade (LF) is in the general form of a J.

6. Device according to one of claims 1 to 5, **characterised in that** said first attachment means (MS1) comprise a second runner (G2) defined on an external face(FE1) of said wall (PC) of the electrical connector (CE) and able to receive at least a portion of said first part (P1).

7. Device according to claim 6, **characterised in that** said first part(P1) comprises two inward steps (DC) defining two abutment surfaces, and **in that** said second runner (G2) comprises, in a rear part (PA), two stop surfaces (SB) preventing said abutment surfaces from passing beyond them when said first part(P1) is introduced into said second runner (G2).

8. Device according to one of claims 1 to 7, **characterised in that** said first attachment means (MS1) comprise a tooth (DT) having an inclined front facet defined on said external face (FE1) of the wall (PC) of the electrical connector (CE), in a zone situated substantially at the middle of the rear part (PA) of said second runner (G2), and **in that** said second attachment means (MS2) comprise a hole able to house said tooth (DT) at the end of introduction of said first part (P1) in said second runner (G2).

9. Device according to one of claims 1 to 8, **characterised in that** said flexible blade (LF) is produced from a metal material.

10. Vehicle element (BB), **characterised in that** it comprises an electrical connection device (D) according to one of claims 1 to 9.

11. Vehicle optical unit (BO), **characterised in that** it comprises at least one element (BB) according to claim 10.
